# EUROPÄISCHE PATENTSCHRIFT

(11) **EP 2 145 501 B1**
(45) Veröffentlichungstag und Bekanntmachung des Hinweises auf die Patenterteilung: **28.03.2012**
(21) Anmeldenummer: 08735193.8
(22) Anmeldetag: 12.04.2008
(51) Int. Cl.: H04Q 9/00

(54) **BAUTEIL AUF BASIS EINER KERAMISCHEN MASSE**
COMPONENT BASED ON A CERAMIC MATERIAL
COMPOSANT À BASE D'UNE MATIÈRE CÉRAMIQUE

(30) Priorität: 05.05.2007 DE 102007021172
(43) Veröffentlichungstag der Anmeldung: 20.01.2010
(60) Teilanmeldung: 11000136.9
(73) Patentinhaber: Refractory Intellectual Property GmbH & Co. KG, 1100 Wien (AT)
(72) Erfinder: PISCHEK, Stefan, A-8682 Hönigsberg (AT); PIRKER, Stefan, A-9500 Villach (AT); ERLACHER, Artur, A-9220 Velden (AT); FACHBERGER, Rene, A-9500 Villach (AT); RESSMANN, Michael, A-9581 Ledenitzen (AT)
(74) Vertreter: Becker, Thomas
(86) Internationale Anmeldenummer: PCT/EP2008/002905
(87) Internationale Veröffentlichungsnummer: WO 2008/135135

(56) Entgegenhaltungen:
- DE-A1- 3 503 221
- DE-A1- 3 526 391
- DE-A1- 10 104 582
- GB-A- 2 340 226
- US-A- 4 481 809
- US-A- 5 369 327
- US-A1- 2003 020 480
- US-A1- 2006 056 959
- US-B1- 6 806 808

## Beschreibung

Die Erfindung betrifft ein Bauteil auf Basis einer keramischen Masse, die bei Temperaturen über 800° C, weitestgehend stabil ist (das heißt, dass das Bauteil bei dieser Temperatur seine anwendungsgemäße Aufgabe erfüllen kann) sowie ein Verfahren zur Überwachung des Bauteils. Das Bauteil kann ungebrannt sein. Die chemischen/keramischen Reaktionen zur Erreichung der Temperaturbeständigkeit (bis hin zur Feuerfestigkeit) ergeben sich dann beispielsweise erst beim Einsatz des Bauteils. Insoweit umfasst die Erfindung Bauteile mit einer Temperaturbeständigkeit auch über 900° C, > 1.000° C, aber auch > 1.100° C, > 1.200° C, > 1.300° C und schließlich Produkte für Hochtemperaturanwendungen über 1.400° C. Das Bauteil kann auch getempert oder gebrannt sein. Die letztgenannte Gruppe umfasst Bauteile, die eine Temperaturbeständigkeit (Feuerfestigkeit) im oben angegebenen Bereich aufweisen.

Das Bauteil kann aus einer monolithischen Masse bestehen; insbesondere handelt es sich jedoch um ein geformtes Bauteil. Beispiele für ein geformtes feuerfestes Bauteil der genannten Art sind:
- Steine (bricks) beliebiger Form und Größe, beispielsweise zur feuerfesten Auskleidung eines Industrieofens, beispielsweise einer Pfanne, eines Tundish, einer Glaswanne, eines Konverters, eines Zement-Drehrohrofens, eines Schachtofens, einer Müllverbrennungsanlage oder dergleichen
- Platten, einschließlich Schieberplatten für Schieberverschlüsse, wie sie zur Regelung/Steuerung des Ausflusses von Metallschmelze an metallurgischen Schmelzgefäßen verwendet werden,
- Kegel und Kegelstümpfe, einschließlich Gasspülkegel (Gasspülsteine), wie sie zur Zuführung von Gasen, meist Inertgasen, in Metallschmelzen verwendet werden. Zu dieser Gruppe gehören auch Gasspülsteine anderer Geometrie.
- Sonstige Formen, beispielsweise Rinnen, entlang der eine Metallschmelze geführt wird, Stopfen zur Regelung der Ausflussmenge einer Schmelze aus einem metallurgischen Schmelzgefäß, Hülsen, Lochsteine (well nozzle, well block) und viele andere.

Die genannten Bauteile können aus unterschiedlichen Werkstoffen hergestellt werden, beispielsweise aus einem basischen Versatz auf Basis MgO oder einem nicht basischen Versatz auf Basis Al₂O₃, TiO₂, ZrO₂ und/oder SiO₂. Die Erfindung ist auf alle Werkstoffsysterne anwendbar. Die Bauteile können gegossen, gestampft, gepresst oder sonst wie verarbeitet sein. Ihr Bindungssystem unterliegt keinen Beschränkungen. Die Erfindung umfasst demnach beispielsweise C-gebundene, keramisch oder hydraulisch gebundene Bauteile.

Alle Bauteile unterliegen einem Verschleiß. Sowohl aus verfahrenstechnischen wie aus finanziellen Gründen besteht der Wunsch, die Haltbarkeit (Standzeit) des Bauteils zu optimieren. Häufig ist dies jedoch nicht möglich, da keine Informationen über den Zustand (Verschleißgrad) des Bauteils vorliegen. Dies gilt insbesondere während des Einsatzes, da die hohen Anwendungstemperaturen eine entsprechende Überprüfung erschweren oder unmöglich machen.

Die DE 35 03 221 A1 beschreibt einen Gasspülstein mit Reststärkenanzeige. Im Gasspülstein sind elektrische Kabel verlegt. Sobald der Gasspülstein ein bestimmtes Verschleißmaß erreicht hat, schmelzen die Kabel auf, wodurch ein Signal ausgelöst wird. Die bekannte Einrichtung dient also nur dazu, einen bestimmten Verschleißzustand anzuzeigen.

Die GB 2340226 beschreibt einen feuerfesten Stein, in dem ein Sensor angeordnet ist, um wenigstens eine der Größen: Steinlänge, Wärmefluss durch den Stein, Spannungsrate im Stein anzuzeigen. Der Sensor besteht aus keramischem Material und/oder Metallen mit einem Schmelzpunkt oberhalb von Eisen. Der Sensor umfasst ein Licht leitendes Element, das im Stein längs verlegt ist und über die Oberfläche des Steins hinausragt. Dieses Element ist mit einer optischen Übertragungseinrichtung gekoppelt. Die vom Sensor ermittelten Daten werden mit Hilfe von Kabeln oder optischen Fasern an eine Datenverarbeitungsanlage weitergeleitet.

Aus der DE 101 04 582 A1 sind ein Verfahren und eine Einrichtung zur Aufnahme von Messdaten in einem Hüttenwerk bekannt. Mit der Methode kann die Temperatur an verschiedenen Einrichtungen, insbesondere an Hüttengefäßen, bestimmt werden, etwa die Temperatur am Mantel eines Konverters oder einer Pfanne.

In der WO03/080274 A1 wird ein Verfahren zum Betrieb eines Schieberverschlusses vorgeschlagen, bei dem in der Umgebung der feuerfesten Schieberplatten einer oder mehrere der folgenden Parameter bestimmt und ausgewertet werden: Die Abmessungen des Schieberverschlusssystems, die Temperaturen im Bereich des Schieberverschlusses, die Drücke der Zylinder und Federn, die auf die Schieberplatten wirken. Alles dies sind mittelbare Größen, die keine zuverlässige Aussage über den Verschleißgrad des Bauteils ermöglichen.

Aufgabe der Erfindung ist es, eine Identifizierung und Aussagen über den Zustand beziehungsweise die Einsatzzeit des Bauteils vor, während und nach dem Einsatz zu ermöglichen.

Der Erfindung liegt folgende Erkenntnis zugrunde: Die Erfassung verschiedener Kenngrößen um das eigentliche Bauteil herum, wie im Stand der Technik, ist nicht zielführend. So ist eine Schieberverschlussplatte meist in einer Mechanik aus Metall konfektioniert. Ein Gasspülstein ist oft in einem Lochstein angeordnet oder ein Ausguss (nozzle) ist von feuerfesten Steinen oder einer feuerfesten Masse umgeben. Häufig ist das Bauteil in Kontakt mit einer heißen Schmelze oder Brenngut. Vielmehr muss das Bauteil selbst geprüft werden. Unmittelbare optische Erkennungsverfahren (GB 2340226 A) scheiden aus. Dies gilt auch für den unmittelbaren (körperlichen) Anschluss von Mess- und Überwachungsvorrichtungen.

Die Erfindung geht einen anderen Weg. Sie schlägt vor, einen oder mehrere Sensor(en) (beispielsweise 1,2,3,4 oder mehr) in das Bauteil zu integrieren, wobei der Sensor ein Sensor mit einer Antenne zum drahtlosen Empfang und zur drahtlosen Abgabe von Funksignalen ist, um so mindestens eine der folgenden Informationen (auch) während des Einsatzes des Bauteils zu erfassen und an eine Datenverarbeitungsanlage übertragen zu können:
- Informationen zur Identifikation des Bauteils. Hierzu gehören beispielsweise folgende Daten: Produkttyp, Werkstoffsorten, Herstellerangaben, Herstellung-, Liefer- und Einsatzdatum etc.
- Daten über die physikalischen Eigenschaften des Bauteils. Hierzu gehört beispielsweise die Temperatur des Bauteils, mechanische (thermomechanische) Spannungen im Bauteil etc.
- Daten über den Ort und Bewegungen des Bauteils. Diese Information hat insbesondere Bedeutung für Bauteile, die während des Einsatzes bewegt werden, beispielsweise Schieberplatten, Stopfen aber auch höhenverstellbare Gasspülsteine, Lanzen oder dergleichen. Es kann auch der Ort festgestellt werden, an dem sich das Bauteil im Werk befindet.
- Daten über die Einsatzzeit des Bauteils: Dabei wird beispielsweise über eine Temperaturmessung erfasst, wie lange eine Schieberplatte "im Einsatz" war, also Metallschmelze durch die Öffnung der Schieberplatte geflossen ist.

"Integrieren" bedeutet, dass der Sensor im Bauteil angeordnet ist.

Die vorgenannten Informationen (Daten) können einzeln, aber auch in beliebigen Kombinationen für die Bestimmung des Zustandes, beispielsweise des Verschleißgrades des Bauteils wesentlich sein. Dabei werden die Informationen regelmäßig nicht diskret, sondern zeitabhängig erfasst und ausgewertet. Bei mehreren Sensoren können die Daten an unterschiedlichen Stellen des Bauteils erfasst werden. Damit lässt sich zum Beispiel ein Temperaturgradient im Bauteil bestimmen. Ebenso können mehrere Sensoren in mehreren Bauteilen vorgesehen werden. Damit lassen sich Informationen von unterschiedlichen Stellen erhalten und auswerten.

Am Beispiel einer Schieberplatte soll dies verdeutlicht werden:

Bisher entscheidet das Bedienungspersonal empirisch darüber, ob eine gebrauchte Schieberplatte noch einmal eingesetzt werden kann oder nicht.

Daten über die Dauer und Temperaturbelastung der Schieberplatte beim bisherigen Einsatz fehlen. Das Bedienungspersonal hat keine zuverlässigen Informationen darüber, ob in der Vergangenheit mechanische Spannungen im Produkt aufgetreten sind oder nicht. Wird die Schieberplatte erneut verwendet besteht das Risiko, dass sie nicht mehr die benötigte weitere Einsatzdauer unbeschädigt übersteht. Im Extremfall kann es zu Durchbrüchen von Metallschmelze mit katastrophalen Folgen kommen.

Diese Nachteile werden mit einem erfindungsgemäßen Bauteil vermieden. Die vom Sensor übermittelten Daten werden in einer Datenverarbeitungsanlage erfasst und ausgewertet. Die Ist-Daten oder daraus abgeleitete Kenngrößen werden mit Sollwerten verglichen. Ergibt sich dann beispielsweise, dass die Schieberplatte bereits 90 % ihrer berechneten maximalen Einsatzzeit erreicht hat oder bei einer vorangegangenen Benutzung mechanische Spannungen über einem vorgegebenen Grenzwert in der Platte aufgetreten sind wird sie ausgetauscht. Die Sensoren können durch Temperatur- und/oder Spannungsmessung Metallaustritte frühzeitig anzeigen, um größere Schäden zu vermeiden.

Weitere Anwendungsbeispiele sind: Einbau eines Sensors oder eines Bauteils mit Sensor im Boden oder der Wand einer Gießpfanne oder eines anderen metallurgischen Schmelzgefäßes, um die Trocknung einer keramischen Auskleidungsmasse zu überwachen. Zum Beispiel muss die Masse auf eine Mindesttemperatur aufgeheizt werden, um eine vollständige Trocknung zu erreichen.

Bei Gasspülelementen kann im Fall einer Temperaturmessung über Sensoren auf den Verschleißgrad des Bauteils geschlossen werden. Ebenso lassen sich Informationen über die Gasdurchflussmenge durch Temperaturmessung erhalten. Je mehr kühles Gas durchfließt, umso niedriger ist die gemessene Temperatur.

Die Sensoren können weiters dazu dienen, lokale Überhitzungen im Bauteil zu detektieren oder anzuzeigen, wenn ein Temperaturniveau erreicht ist, bei dem eine physikalische/chemische Reaktion wie eine Phasenumwandlung zu erwarten ist.

In ihrer allgemeinsten Ausführungsform betrifft die Erfindung ein Bauteil auf Basis einer keramische Masse mit den Merkmalen von Anspruch 1.

Der Sensor wird üblicherweise in einer Umhüllung konfektioniert, um ihn vor einer übermäßigen Temperaturbelastung, vor Verschmutzung und Bruch zu schützen. Die Umhüllung kann beispielsweise aus Glaskeramik bestehen.

Nach einer Ausführungsform ist der Sensor ein passiver Sensor. Dieser passive Sensor wird über die Funkverbindung mit einer Sende- und Empfangseinheit verbunden. Ein Abfragesignal wird auf dem Funkweg an den passiven Sensor geschickt. Durch Wechselwirkung mit dem Sensor wird ein Antwortsignal erzeugt, welches an die Abfrageeinheit, die jetzt als Empfangsgerät dient, zurückgeschickt wird.

Um in der Empfangseinheit das vom Sensor zurückgesendete Signal von dem auf den Sensor gegebenen Signal zu trennen benötigt man einen Trennmechanismus. Dies erfolgt beispielsweise dadurch, indem das vom Sensor abgegebene Signal eine andere Frequenz aufweist als das dem Sensor zugeführte Signal. Zusätzlich oder alternativ zur Frequenzänderung kann eine zeitliche Verschiebung zwischen den Signalen zur Trennung berücksichtigt werden.

Befindet sich das Bauteil im Ruhezustand wird ein spezifisches, reproduzierbares Signal zurückgesandt. Durch Druck, Temperatur, Spannung etc., die auf das oder im Bauteil wirken, verändert sich das Signal wiederum reproduzierbar.

Der Sensor ist mit einer Antenne zum drahtlosen Empfang und zur drahtlosen Abgabe von Funksignalen ausgebildet. In einer Variante ist der Sensor über ein Kabel mit einer Antenne verbunden, die entsprechende Signale direkt an eine Empfangseinheit übermittelt oder umgekehrt von dieser empfängt. Zur Vermeidung von negativen Effekten bei der Datenübertragung, die zum Beispiel durch Abschirmungseffekte von Metallteilen im Funkweg entstehen können, wird die dem Sensor zugeordnete Antenne vorzugsweise so angeordnet, dass keine Metallteile im Funkweg zur Sende-/Empfangseinheit liegen. Der Sensor kann eine Einrichtung zur Wandlung von elektromagnetischen Wellen in mechanische Wellen und umgekehrt umfassen.

Die Erfindung sieht vor, dass der Sensor als SAW-Element (SAW = Oberflächenwelle = surface acoustic waves) ausgebildet ist. Auf dem Sensor werden mechanische Oberflächenwellen angeregt, deren Verhalten durch Einwirken einer physikalischen Größe wie Druck, Temperatur, Spannung verändert wird. Dies soll an einem Beispiel erläutert werden:

Ein SAW-Sensor besteht aus einem piezoelektrischen Substratkristall, auf dem metallische Strukturen (Reflektoren) aufgebracht werden. Der SAW-Sensor steht über eine Antenne mit dem Sende- und Lesegerät in Funkverbindung. Das Sende- und Lesegerät sendet ein elektromagnetisches Signal aus, das von der Sensor-Antenne empfangen wird. Dieses Signal wird durch einen speziellen Wandler, der sich auf dem SAW-Sensor befindet, in mechanische Schwingungen umgesetzt. Die daraus resultierenden Wellen breiten sich auf der Oberfläche des piezoelektrischen Kristalls aus. An den oben genannten Reflektoren werden die Oberflächenwellen teilweise reflektiert. Anschließend werden diese Oberflächenwellen wieder in elektromagnetische Wellen zurückgewandelt. Da sich der Kristall in Abhängigkeit von physikalischen Größen wie beispielsweise Temperatur, Druck, Spannung ausdehnt oder zusammenzieht, führt dies zu einer Laufzeitänderung des Signals.

Von einer Funkzentrale wird ein elektromagnetischer Hochfrequenzimpuls zum Sensor geschickt. Dieser Impuls wird von der Antenne des Sensors empfangen und durch den Wandler (zum Beispiel einen Interdigitalwandler) in eine sich ausbreitende mechanische Oberflächenwelle umgewandelt. Im Strahlengang dieser mechanischen Wellen liegen die erwähnten reflektierenden (teilreflektierenden) Strukturen auf der Oberfläche des Sensors, die dort in einer individuellen, charakteristischen Reihenfolge ausgebildet sind. Aus einem einzelnen Sendeimpuls entsteht so eine Vielzahl von spezifischen Pulsen, die zum Wandler zurückreflektiert werden. Dort werden sie wieder in elektromagnetische Wellen gewandelt und von der Antenne des Sensors als Antwortsignal zur Funkzentrale zurückgeschickt. Das Antwortsignal enthält die gewünschten Informationen über die Anzahl und Lage der Reflektoren, deren Reflektionsfaktor, sowie die Ausbreitungsgeschwindigkeit der akustischen Welle. Diese Informationen sind mittelbar Informationen zur Identifikation des Bauteils, der physikalischen Eigenschaften des Bauteils, von Ort und Bewegungen des Bauteils und/oder der Einsatzzeit des Bauteils. Über eine entsprechende Kalibrierung lassen sich die gewünschten Daten in der zugeordneten Datenverarbeitungsanlage berechnen.

Die Ausbreitungsgeschwindigkeit der akustischen Wellen beträgt typischerweise nur einige 1.000 m/s, beispielsweise 3.500 m/s. Damit wird die Möglichkeit geschaffen, einen Hochfrequenzimpuls auf einem kleinen Chip (Sensor) so lange zu speichern, bis die elektromagnetischen Umgebungsechos abgeklungen sind. Der Sensor kann aus einem piezoelektrischen Kristall oder einem piezoelektrischen Schichtsystem bestehen. Die genannten Strukturen sind aufgedampft oder sonst wie aufgebracht.

Bauteile der genannten Art werden teilweise in einer metallischen Hülle konfektioniert oder weisen eine metallische Abdeckung auf. Beispielsweise Schieberplatten werden in Metallkassetten angeordnet und in einer metallischen Schiebermechanik platziert. Die metallischen Elemente bewirken eine Abschirmung gegenüber elektromagnetischen Strahlen. In diesem Fall sieht die Erfindung bei einer Funkübertragung der Daten vom Sensor zur Antenne vor, den entsprechenden Metallteil (die metallische Abdeckung), der Antenne des Sensors benachbart, mit einer Aussparung zur Durchleitung von Funksignalen auszubilden. Ein weiteres Merkmal ist es, den Sensor im Randbereich eines Bauteils anzuordnen, um eine optimierte Funkübertragung zu ermöglichen. "Randbereich" bedeutet beispielsweise "Kaltseite des Bauteils". Darunter wird der Abschnitt des Bauteils verstanden, der sich beim Einsatz am wenigsten erwärmt. Beispielsweise bei einer Schieberplatte ist dies der Randbereich einer Platte, während um den Bereich der Ausgussöffnung herum die höchsten Temperaturen herrschen.

Bei einem Auskleidungsstein für eine Pfanne (ladle) wird dies die dem äußeren Metallmantel benachbarte Seite des Steins sein. Bei einem Gasspülstein wird der Sensor vorzugsweise am gaszuführseitigen Ende angeordnet.

Bei der bereits oben genannten Variante mit einer Kabelverbindung zwischen Sensor und Antenne wird die Zahl der Bauteile reduziert, weil von der Sensorantenne eine direkte Datenübermittlung zur Empfangs-/ Sendestation ermöglicht wird, sofern die Antenne an einer Stelle positioniert wird, die eine ungestörte Übertragung auf die Sende-/Empfangsstation erlaubt. Das Kabel kann ein flexibles Hochfrequenzkabel sein, beispielsweise aus Kupfer (Cu) mit Polytetrafluorethylen (PTFE) oder Keramik als Dielektrikum, wodurch die Temperaturbeständigkeit verbessert wird.

Der Sensor kann zumindest teilweise aus korrosionsbeständigem Stahl bestehen, beispielsweise einem Stahl der Sorte 1.4845. Dichtungen bestehen für die genannten Anwendungen aus hitzbeständigen Materialen, beispielsweise einem Fluorelastomer.

Der Hersteller des feuerfesten Bauteils verfügt über Kalibrierdaten, aus denen sich berechnen lässt, welche Temperatur an einer bestimmten Stelle des Bauteils welcher Temperatur an anderen Stellen des Bauteils entspricht. So lässt sich beispielsweise bei einer gemessenen Temperatur von X° C im Randbereich einer Schieberplatte auf eine Temperatur im Durchflussbereich von Y° C für einen bestimmten Werkstoff schließen.

Die reflektierten mechanischen Wellen beziehungsweise die daraus entstehenden Antwortsignale ermöglichen, wie ausgeführt, die Auswertung der gewünschten Informationen, einschließlich physikalischer Daten, wie Spannungen im Bauteil, aber auch die Einsatzzeit unter Temperaturlast etc. Durch einen schwimmenden ("losen") Einbau des Sensors ist eine reine Temperaturmessung möglich. Durch einen Einbau des Sensors mit starrer Verbindung im Bauteil (das heißt: Bauteil und Sensor sind fest verbunden) kann man weitere Kenngrößen wie mechanische Spannungen erfassen. Die Messgrößen lassen sich getrennt ermitteln.

Das zugehörige Überwachungsverfahren weist in der allgemeinsten Ausführungsform die Schritte gemäß Anspruch 12 auf.

Weitere Merkmale des Verfahrens wurden vorstehend anhand von Aufgabe und Wirkungsweise des Sensors beschrieben und ergeben sich aus den Merkmalen der Unteransprüche 13-15 und den nachfolgenden Beispielen. Die darin beschriebenen Merkmale können einzeln oder in verschiedenen Kombinationen für die Anwendung der Erfindung wesentlich sein.

Die Erfindung wird nachstehend anhand verschiedener Ausführungsbeispiele erläutert, wobei die Figuren stark schematisiert sind. Dabei zeigen:
- Figur 1:: Eine perspektivische Ansicht eines piezoelektrischen Sensor-Kristalls
- Figur 2:: Eine perspektivische Ansicht eines feuerfesten Bauteils in Form eines Steins
- Figur 3:: Eine Aufsicht auf eine in einem Metallmantel konfektionierte Schieberplatte
- Figur 4:: Eine Ansicht einer Schiebermechanik mit eingelegter Schieberplatte innerhalb eines Überwachungs- und Kontrollsystems

In den Figuren sind gleiche beziehungsweise gleich wirkende Teile mit gleichen Bezugsziffern dargestellt.

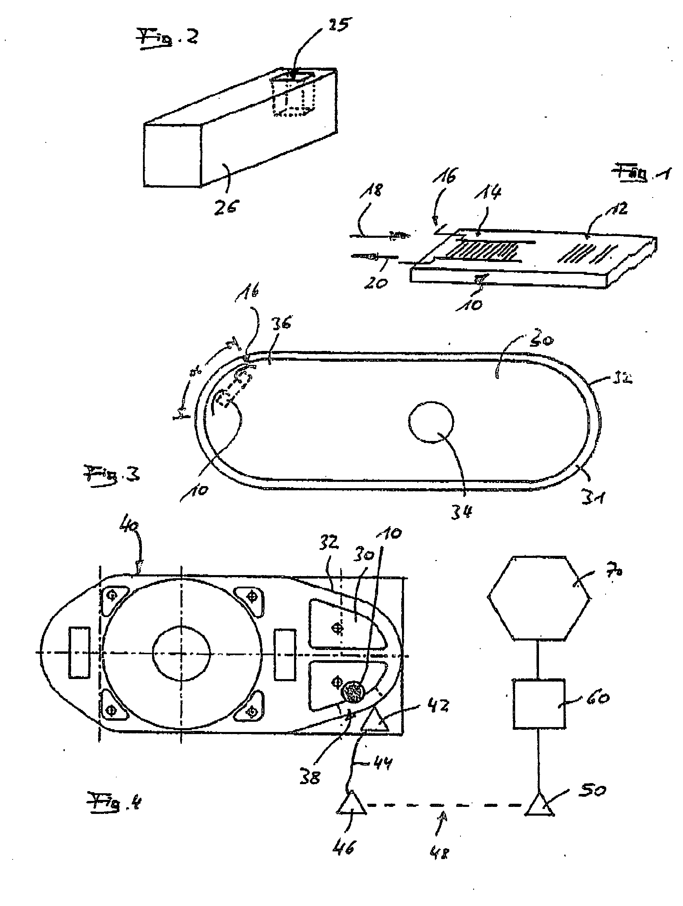

Figur 1 zeigt einen quaderförmigen piezoelektrischen Kristall (dargestellt ohne seine glaskeramische Umhüllung). Auf seiner einen Oberfläche sind teilreflektierende Strukturen 12 aufgebracht, und zwar in einer charakteristischen (für den Sensor spezifischen) Anordnung. Zu erkennen ist ferner ein Interdigitalwandler 14. Die elektrischen Anschlüsse sind aus dem Kristall herausgeführt, um so Sammelschienen des Interdigitalwandlers mit einer Antenne 16 zu verbinden. Der Kristall mit seinen Strukturen 12 und dem Wandler 14 bildet einen Sensor 10.

Ein von einer Funkzentrale (Steuergerät) (60 in Figur 4) ausgesendeter elektromagnetischer Flochfrequenzimpuls (schematisch mit Pfeil 18 dargestellt) erreicht
den Sensor 10, wird von der Antenne 16 empfangen und durch den Wandler 14 in eine sich ausbreitende mechanische Oberflächenwelle umgewandelt. Aus dem Abfragesignal entsteht eine Vielzahl von Oberflächenwellen, die entsprechend der Anordnung der Strukturen 12 zum Messzeitpunkt zum Wandler 14 zurückreflektiert und über den Wandler 14 in ein elektromagnetisches Signal (Pfeil 20) rückgewandelt werden. Dieses Signal wird von der Funkzentrale 60, dem eine Antenne 50 vorgeschaltet ist, empfangen und an ein Datenverarbeitungsgerät 70 (Figur 4) weitergeleitet und ausgewertet.

Der Sensor 10 gemäß Figur 1 kann beispielsweise in eine Vertiefung 25 eines quaderförmigen feuerfesten Magnesiasteins 26 (Figur 2) eingesetzt und dort vermörtelt werden.

Figur 3 zeigt die Anordnung des Sensors 10 in einer Schieberplatte 30, die in einen bewegbaren Metallmantel 32 eingemörtelt ist (Mörtelfuge 31). Ein Gießloch der Schieberplatte 30 ist mit 34 gekennzeichnet. Am Rand 36 der Schieberplatte 30 ist der Sensor 10 in das keramische Material der Schieberplatte 30 eingearbeitet (ummörtelt). Mit dem Sensor 10 soll hier das Bauteil (die spezifische Schieberplatte) und dessen Temperatur identifiziert werden. Zum Schutz ist der Sensor 10 in einer Umhüllung aus Glaskeramik angeordnet. Eine Antenne 16 steht über den Kristall vor. Ein benachbarter korrespondierender Abschnitt des Metallmantels 32 (dargestellt mit dem Winkel α in Figur 3) weist gegenüber der Antenne 16 eine (nicht erkennbare) schlitzförmige Aussparung auf, um die elektromagnetischen Wellen 18, 20 von außen an die Antenne 16 heranführen und von dieser wegführen zu können.

Figur 4 zeigt einen zugehörigen Teil einer Schiebermechanik 40 zur Aufnahme von Kassette 32 und Schieberplatte 30. Das Schiebersystem regelt einen Stahlfluss von einer Pfanne in einen nachgeschalteten Tundish.

Der Sensor 10 mit Antenne 16 ist schematisch dargestellt. Die schlitzförmige Öffnung in der Kassette 32 ist mit 38 angedeutet. Unmittelbar gegenüber der Antenne 16 des Sensors (Chips) 10 liegt eine weitere Antenne 42, die über ein temperaturbeständiges Koaxialkabel 44 mit einer dritten Antenne 46 verbunden ist, die über eine Funkstrecke 48 mit der bereits genannten Antenne 50 in Verbindung steht. Die Signalübertragung (Hochfrequenzsignal) erfolgt von der Funkzentrale 60 über die Antenne 50 zur Antenne 46 (drahtlos) und von dort (drahtgebunden) zur Antenne 42 und wiederum drahtlos zur Antenne 16 des Sensors 10. Das vom Sensor 10 reflektierte Signal gelangt auf umgekehrtem Weg zur Funkzentrale 60. Der Sensor 10 ist in der Lage, ein Signal zu senden, das Informationen über die aktuelle Temperatur sowie eine vorher zugeordnete Identifikationskodierung enthält. Dabei empfängt der Sensor 10 einen elektromagischen Puls (im GHz Frequenzbereich), verarbeitet diesen und sendet eine Folge von charakteristischen elektromagnetischen Pulsen zurück. Aus den zeitlichen Abständen dieser Pulse kann die Identifikation und die Temperatur dekodiert werden. Der Sensor basiert auf der SAW Technologie und ist für eine Funkübertragung mit der Antenne 16 ausgerüstet.

Die Schiebermechanik 40 besteht aus Metall. Deshalb ist es notwendig, das elektromagnetische Signal über ein Kabel aus der Schiebermechanik 40 herauszuleiten. Dazu wird die Antenne 42 fix gegenüber der Antenne 16 montiert. Die über das Kabel 44 angeschlossene Antenne 46 ist außen an der Schiebermechanik 40 montiert.

Im Betrieb sendet die Funkzentrale 60 elektromagnetische Signale (Pulse) von der Antenne 50 an die Antenne 46. Von der Antenne 46 wird jedes Signal an die Antenne 42 über das Koaxialkabel 44 übertragen, welche das Signal an den Sensor 10 über die Antenne 16 funkt. Der Sensor 10 wandelt das Signal in eine Oberflächenwelle um, die nach Reflexion an den Strukturen 12 Informationen über Sensortemperatur bzw. die Identifikation des Bauteils 30 enthält. Diese Pulsfolge wird vom Sensor 10 über die Antennen zur Funkzentrale 60 übertragen. Die Funkzentrale 60 ermittelt die Identifikation und die Temperatur aus der Anzahl der Pulse und deren zeitlichen Abständen. Die ermittelten Daten werden an das Datenverarbeitungsgerät 70 übertragen.

Das Datenverarbeitungsgerät 70 kann aus den Daten, die vom Sensor stammen, folgende Informationen extrahieren bzw. errechnen:
- Identifikationsfunktion:
   - Identifikation der Schieberplatte 30 vor dem Einsatz
   - Identifikation der Schieberplatte 30 während des Einsatzes
   - Identifikation der Schieberplatte 30 nach dem Einsatz.

Aufgrund der Identifikation kann der Zustand der Schieberplatte 30 mit Daten des Stahlwerkes verknüpft werden.
- Temperaturmessung
   - Bestimmung der Gießzeit und Einsatzdauer durch Auswertung der Temperaturen zu bestimmten Zeitpunkten
   - Anzahl der Thermoschocks durch Analyse der Temperaturen zu bestimmten Zeitpunkten
   - Überschreitung, Unterschreitung oder Erreichen von kritischen Temperaturbereichen z. B. Phasenumwandlungstemperatur von Zirkonoxid in der Schieberplatte 30 bei 1.050°C bis 950°C
   - Früherkennung von Unregelmäßigkeiten z. B. Durchbrüchen.

Alle gesendeten/empfangenen Signale werden durch die angeschlossene Datenverarbeitungsanlage 70 registriert und ausgewertet.

Das Beispiel gemäß Figur 4 kann wie folgt abgewandelt werden. Anstelle des Sensors 10 mit Funkverbindung zur Antenne 3 wird ein Stabsensor verwendet, der über ein Kabel mit einer Antenne verbunden ist. Der Sensor liegt dabei in der Schieberplatte, also auf der "Heißseite", die Antenne im Abstand davon in einem Bereich, wo geringere Temperaturen herrschen. Die Überbrückung der Metallkassette der Schieberplatte erfolgt mit Hilfe des Kabels. Die Antenne wird so angeordnet, dass eine störungsfrei Funkverbindung zur Antenne 50 der Funkzentrale 60 besteht. Bei dieser Ausführungsform werden die in Fig. 4 mit 42 und 46 bezeichneten Antennen überflüssig.

## Patentansprüche

1. Bauteil auf Basis einer keramischen Masse, die bei Temperaturen über 800° C weitestgehend stabil ist, wobei das Bauteil beim anwendungsgemäßen Einsatz in Kontakt mit einer Schmelze oder Brenngut steht, wobei im Bauteil (26, 30) mindestens ein SAW-Sensor (10) integriert ist, mit dem mindestens eine der folgenden Informationen während des Einsatzes des Bauteils (26, 30) erfassbar und an eine Datenverarbeitungsanlage (70) übertragbar ist: Identifikation des Bauteils (26, 30), physikalische Eigenschaften des Bauteils (26, 30), Bewegungen des Bauteils (30), Einsatzzeit des Bauteils (26, 30), Ort des Bauteils (26, 30), wobei der SAW-Sensor (10) mit einer Antenne (16) zum drahtlosen Empfang und zur drahtlosen Abgabe von Funksignalen ausgebildet ist.

2. Bauteil nach Anspruch 1, dessen SAW-Sensor (10) in einer Umhüllung konfektioniert ist.

3. Bauteil nach Anspruch 2, dessen Umhüllung aus Glaskeramik besteht.

4. Bauteil nach Anspruch 2, dessen Umhüllung elektromagnetische Wellen nicht abschirmt.

5. Bauteil nach Anspruch 1, dessen SAW-Sensor (10) ein passiver Sensor ist.

6. Bauteil nach Anspruch 1, dessen SAW-Sensor (10) über ein Kabel mit einer Antenne (16) zur Abgabe von Funksignalen ausgebildet ist.

7. Bauteil nach Anspruch 1, dessen SAW-Sensor (10) eine Einrichtung (14) zur Wandlung von elektromagnetischen Wellen in mechanische Wellen und umgekehrt aufweist.

8. Bauteil nach Anspruch 1, dessen SAW-Sensor (10) Oberflächenstrukturen (12) aufweist, die mechanische Oberflächenwellen reflektieren.

9. Bauteil nach Anspruch 1, dessen SAW-Sensor (10) eine Einrichtung
zum Empfang und zur Abgabe von Hochfrequenz-Signalen aufweist.

10. Bauteil nach Anspruch 1, dessen SAW-Sensor (10) einen
piezoelektrischen Kristall umfasst.

11. Bauteil nach Anspruch 1, das benachbart zum SAW-Sensor (10) eine metallische Abdeckung (32) aufweist, wobei die Abdeckung (32), der Antenne (16) des SAW-Sensors (10) benachbart, eine Aussparung (28) zur Durchleitung von Funksignalen aufweist.

12. Verfahren zur Überwachung eines Bauteils nach einem der Ansprüche 1 bis 11, mit folgenden Schritten:
12.1 Aussenden eines Funksignals von einer Funkzentrale an den SAW-Sensor,
12.2 Empfang des Funksignals durch den SAW-Sensor,
12.3 Verarbeitung, Umwandlung und/oder Codierung des Signals durch den oder im SAW-Sensor
12.4 Aussenden eines Antwort-Funksignals mit mindestens einer Information über die Identifikation des Bauteils (26,30), physikalischen Eigenschaften des Bauteils (26,30), Bewegungen des Bauteils (30), Einsatzzeit des Bauteils (26,30), Ort des Bauteils (26,30) vom SAW-Sensor an die Funkzentrale,
12.5 Auswertung der Funksignale und damit übermittelten Informationen sowie Abgleich dieser Informationen und/oder daraus ermittelten Kenngrößen mit Soll-Daten in einer Datenverarbeitungsanlage.

13. Verfahren nach Anspruch 12, bei dem die von der Funkzentrale ausgesendeten und empfangenen Funksignale elektromagnetische Wellen sind.

14. Verfahren nach Anspruch 13, bei dem der SAW-Sensor die empfangenen elektromagnetischen Wellen über einen Wandler in mechanische Oberflächenwellen umwandelt und diese über die Oberfläche des SAW-Sensors weiterleitet, der mit reflektierenden Oberflächenstrukturen ausgebildet ist, die die mechanischen Oberflächenwellen zumindest teilweise an den Wandler zurück reflektieren, der diese mechanischen Oberflächenwellen erneut in elektromagnetische Wellen wandelt und an die Funkzentrale zurücksendet.

15. Verfahren nach Anspruch 12, bei dem von der Funkzentrale ausgesendete und empfangene Signale von der Datenverarbeitungsanlage ausgewertet, mit Soll-Werten verglichen und angezeigt werden.

## Claims

1. Structural component based on a ceramic body that is very largely stable at temperatures above 800 °C, the structural component being in contact with a hot melt or material to be fired when used, wherein at least one SAW sensor (10) being integrated within the structural component (26, 30), with which at least one of the following items of information is capable of being recorded and transmitted to a data-processing system (70) during the operation of the structural component (26, 30): identification of the structural component (26, 30), physical properties of the structural component (26, 30), movements of the structural component (30), time of operation of the structural component (26, 30), location of the structural component (26, 30), wherein the SAW sensor (10) is designed with an antenna (16) for wireless reception and for wireless emission of radio signals.

2. Structural component according to Claim 1, the SAW sensor (10) of which is assembled in a casing.

3. Structural component according to Claim 2, the casing of which is made of glass ceramic.

4. Structural component according to Claim 2, the casing of which does not shield electromagnetic waves.

5. Structural component according to Claim 1, the SAW sensor (10) of which is a passive sensor.

6. Structural component according to Claim 1, the SAW sensor (10) of which is designed with an antenna (16) for emission of radio signals via a cable.

7. Structural component according to Claim 1, the SAW sensor (10) of which exhibits a device (14) for converting electromagnetic waves into mechanical waves and conversely.

8. Structural component according to Claim 1, the SAW sensor (10) of which exhibits surface structures (12) which reflect mechanical surface waves.

9. Structural component according to Claim 1, the SAW sensor (10) of which exhibits a device for receiving and for emitting high-frequency signals.

10. Structural component according to Claim 1, the SAW sensor (10) of which includes a piezoelectric crystal.

11. Structural component according to Claim 1, which exhibits, adjacent to the SAW sensor (10), a metallic covering (32), the covering (32) exhibiting, adjacent to the antenna (16) of the SAW sensor (1), a recess (28) for the purpose of passing radio signals through.

12. Process for monitoring a structural component according to one of Claims 1 to 11, with the following steps:
12.1 emitting a radio signal from a radio control centre to the SAW sensor,
12.2 reception of the radio signal by the SAW sensor,
12.3 processing, conversion and/or coding of the signal by or in the SAW sensor,
12.4 emitting a response radio signal with at least one information relating to the identification of the structural component (26, 30), physical properties of the structural component (26, 30), movements of the structural component (30), time of operation of the structural component (26, 30), location of the structural component (26, 30), from the SAW sensor to the radio control centre,
12.5 evaluation of the radio signals and of information communicated thereby as well as adjustment of this information and/or of characteristic quantities ascertained therefrom with set data in a data-processing system.

13. Process according to Claim 12, wherein the radio signals transmitted and received by the radio control centre are electromagnetic waves.

14. Process according to Claim 13, wherein the SAW sensor converts the received electromagnetic waves into mechanical surface waves via a transducer and relays said waves via the surface of the SAW sensor which is designed with reflecting surface structures which reflect the mechanical surface waves at least partly back to the transducer which converts these mechanical surface waves into electromagnetic waves again and sends said waves back to the radio control centre.

15. Process according to Claim 12, wherein signals transmitted and received by the radio control centre are evaluated by the data-processing system, compared with set values, and indicated.

## Revendications

1. Composant à base d'une masse céramique, qui est très largement stable à des températures supérieures à 800°C, le composant étant en contact lors d'une utilisation conforme à l'application avec une masse fondue ou un article à cuire, au moins un capteur SAW (ondes acoustiques de surface) (10) étant intégré dans le composant (26, 30), capteur avec lequel au moins l'une des informations suivantes peut être enregistrée pendant l'utilisation du composant (26, 30) et peut être transmise à un système de traitement de données (70) : identification du composant (26, 30), propriétés physiques du composant (26, 30), mouvements du composant (30), temps d'utilisation du composant (26, 30), emplacement du composant (26, 30), le capteur SAW (10) étant conçu avec une antenne pour la réception sans fil et pour l'émission sans fil de signaux radio.

2. Composant selon la revendication 1, dont le capteur SAW (10) est confectionné dans une enveloppe.

3. Composant selon la revendication 2, dont l'enveloppe est en vitrocéramique.

4. Composant selon la revendication 2, dont l'enveloppe ne protège pas contre les ondes électromagnétiques.

5. Composant selon la revendication 1, dont le capteur SAW (10) est un capteur passif.

6. Composant selon la revendication 1, dont le capteur SAW (10) est conçu au moyen d'un câble avec une antenne (16) pour l'envoi de signaux radio.

7. Composant selon la revendication 1, dont le capteur SAW (10) présente un dispositif (14) pour la conversion d'ondes électromagnétiques en ondes mécaniques et inversement.

8. Composant selon la revendication 1, dont le capteur SAW (10) présente des structures de surface (12) qui réfléchissent des ondes de surface mécaniques.

9. Composant selon la revendication 1, dont le capteur SAW (10) présente un appareil pour la réception et pour l'envoi de signaux à haute fréquence.

10. Composant selon la revendication 1, dont le capteur SAW (10) comprend un cristal piézoélectrique.

11. Composant selon la revendication 1, qui présente à proximité du capteur SAW (10) un revêtement (32) métallique, le revêtement (32) présentant à proximité de l'antenne (16) du capteur SAW (10) un évidement (28) pour le passage de signaux radio.

12. Procédé pour le contrôle d'un composant selon l'une des revendications 1 à 11, comprenant les étapes suivantes :
12.1 Envoi d'un signal radio d'un central radio au capteur SAW,
12.2 Réception du signal radio par le capteur SAW,
12.3 Traitement, conversion et/ou codage du signal par le capteur SAW ou dans le capteur SAW.
12.4 Envoi d'un signal radio de réponse comprenant au moins une information sur l'identification du composant (26, 30), les propriétés physiques du composant (26, 30), les mouvements du composant (30), le temps d'utilisation du composant (26, 30), l'emplacement du composant (26, 30) du capteur SAW au central radio,
12.5 Analyse des signaux radio et des informations ainsi transmises et harmonisation de ces informations et/ou grandeurs caractéristiques déterminées à partir de là avec des données de consigne dans un système de traitement de données.

13. Procédé selon la revendication 12, dans lequel les signaux radio envoyés et reçus par le central radio sont des ondes électromagnétiques.

14. Procédé selon la revendication 13, dans lequel le capteur SAW convertit les ondes électromagnétiques reçues par un convertisseur en ondes de surface mécaniques et les transmet par la surface du capteur SAW, qui est conçu avec des structures de surface réfléchissantes qui renvoient les ondes de surface mécaniques au moins en partie au convertisseur, lequel convertit ces ondes de surface mécaniques à nouveau en ondes électromagnétiques et les renvoie au central radio.

15. Procédé selon la revendication 12, dans lequel des signaux envoyés et reçus par le central radio sont analysés par le système de traitement de données, comparés avec des valeurs de consigne et affichés.
